# EUROPEAN PATENT APPLICATION

(11) **EP 0 611 037 A1**
(43) Date of publication of application: **17.08.1994**
(21) Application number: 94300233.7
(22) Date of filing: 13.01.1994
(51) Int. Cl.: B32B 7/06, B32B 27/00

(54) **Layered product**

(30) Priority: 28.01.1993 GB 9301655; 14.04.1993 GB 9307641
(71) Applicant: DU PONT DE NEMOURS INTERNATIONAL S.A., CH-1218 Le Grand-Saconnex (Genève) (CH)
(72) Inventor: Trouilhet, Yves, CH-1222 Vesenaz/GE (CH); Cardinal, Jean-Claude, CH-1297 Founex/VD (CH)
(74) Representative: Jones, Alan John

(57) **Abstract**

A layered product and a process for its manufacture is disclosed, the layered product comprising a porous substrate (9), a barrier layer (10) and a release layer (11) so situated such that the barrier layer is between the porous substrate and the release layer. A layered product according to the invention is suitable for wound coverings, protective clothing, diapers, food packaging, roofing underliners and the like.

## Description

### Technical Field

This invention relates to a process for making layered products demonstrating moisture vapor permeability, while acting as barriers to liquids and microorganisms such as viruses and bacteria. Such layered products have various end-uses including as wound coverings, protective clothing, diapers, personal hygiene products, food packaging, the construction industry, e.g. roofing underliners and the like.

Various difficulties are encountered in manufacturing such layered products due to the fact that certain layers must be made sufficiently thin to provide the layered product with a satisfactory moisture vapor transmission rate (MVTR). These layers are often difficult to produce and subsequently handle, as they often have a tendency to adhere to unintended surfaces, e.g. various surfaces of the manufacturing equipment with which they contact.

Various processes are known for overcoming this problem. German patent application publication DE 40 16 348 A1 discloses a method for extruding thin layers onto substrates in which suction is applied under the substrate opposite the extruded layer to apparently partially draw the layer into substrate to better adhere the layer to the substrate and to form a thinner layer than would be achieved without the use of suction.

European Patent Specification EP 0 295 694 B1 discloses a process for extruding a thin layer onto a substrate which employs a thermoplastic resin having a particularly high melt viscosity at the conditions of the extrusion. In one embodiment, the thin layer may be coextruded with a second, peelable layer, the second, peelable layer serving to provide support for the thin layer during the extrusion operation and subsequently being peeled away.

It is an object of the present invention to provide a layered product comprising a porous substrate, a barrier layer, a release layer and optional other layers as described hereinafter, the barrier layer being sufficiently thin to provide the requisite MVTR, while acting as a barrier to liquids and microorganisms such as viruses and bacteria. The layered product is made according to the invention by way of an extrusion process wherein a barrier layer and release layer (and optional other layers) are coextrusion coated onto a porous substrate. The release layer enables an improved adhesion of the barrier layer to the porous substrate by preventing the barrier layer from adhering to unintended surfaces, e.g. the chill roll or the nip roll of the manufacturing equipment, as hereinafter described. The release layer thereby allows use of a barrier layer material having a viscosity significantly lower than that disclosed in the aforementioned EP 0 295 694 B1, which allows a better penetration of the barrier layer into the porous substrate.

Accordingly, this invention relates to a layered product comprising a porous substrate, a barrier layer and a release layer so situated such that the barrier layer is between the porous substrate and the release layer, and to a method for its manufacture.

### Brief Description of the Figures

Figure 1 illustrates an apparatus configuration adapted for two-layer coextrusion-extrusion onto a porous substrate.

Figure 2 shows a device adapted for three-layer coextrusion.

Figures 3a to 3d show cross-sectional views of layered products produced by the process of the invention.

Figure 4 shows a device adapted for three-layer coextrusion coating onto a porous substrate and for applying a second porous substrate thereto.

### Background of the Invention

As already mentioned, the process of this invention enables the production of layered products whose barrier layer and a release layer have a smaller thickness, and corresponding improved MVTR, than heretofore obtainable. Accordingly, using the process of this invention, it is possible to produce a layered product whose barrier layer and a release layer taken together can have a combined thickness as small as 4-20 microns.

As used herein, certain terms are defined as follows.

"Porous substrate" refers to a substrate being both porous and able to impart to the layered product the required level of mechanical strength. The particular material of the substrate and its weight will be so chosen according to the particular requirements of the end use.

Typically, the substrate will comprise paper, woven or non-woven fabrics (preferably spun-bonded), and porous or perforated films. Preferred substrates comprise polyester terephthalate (PET), polypropylene (PP) and high density polyethylene (HDPE). The weight of the porous substrate will normally range from 15 to 150 g/m².

"Barrier layer" refers to a layer which is permeable to moisture vapor but acts as a barrier to liquids such as water and blood and microorganisms such as viruses and bacteria. Typical barrier layers according to the invention will be made from any thermoplastic known for its moisture vapor permeability characteristics, such as a copolyether amide, a copolyether ester or a polyurethane. The barrier layer will have a melt viscosity ranging from about 50 to 500 Pa·s at a die temperature between 220 and 240 °C and shear rate of 1000 s⁻¹.

Preferred thermoplastics for the barrier layer are copolyether esters e.g. segmented elastomers having soft polyether segments and hard polyester segments (c.f. U.S. Patent No. 4,739,012), such as Hytrel® (available from the DuPont Company); and copolyether amides which are available under the name Pebax ® (available from Elf Atochem).

Alternatively, the barrier layer may comprise a bicomponent film of the previously mentioned thermoplastic and a hydrophobic layer. As used herein "hydrophobic" means hydrophobic in comparison to the thermoplastic, which tends to be highly hydrophilic. The hydrophobic layer will be so situated such that it is between the thermoplastic and the porous substrate. The bicomponent film will permit differential transfer of moisture vapor away from the porous substrate to thereby prevent buildup of moisture. Being hydrophobic, this layer will avoid swelling when exposed to water and therefore will tend to adhere well to the porous substrate. Suitable types of hydrophobic layers and bicomponent films are known in the art, e.g., as disclosed in European Patent Application EP 0 322 778 A2.

The thickness of the barrier layer (or bicomponent film) will be selected according to end-use of the layered product and the desired MVTR, and will typically range from 3-25 microns in thickness, more typically 5-15 microns.

"Release layer" refers to a layer of an exterior layer of the layered product so situated such that the barrier layer is between the porous substrate and the release layer and whose main function is to help prevent the layered product from adhering to the equipment used to fabricate the layered product.

The release layer will preferably have a melt temperature ranging from 170-250 °C and will typically comprise an ethylene copolymer e.g. ethyl vinylacetate (EVA), ethylene ethylacrylate (EEA), ethylene butylacrylate (EBA) or ethylene methylacrylate (EMA) or a low molecular weight wax and optionally further contains an amide-containing release additive such as Conpol ® 4R (available from the DuPont Company). The amide will preferably be present in the mixture in an amount ranging from 0.2 to 20 weight percent.

The thickness of the release layer will be selected according to the type of barrier layer and end use of the layered product and will typically range from 1-5 microns in thickness, preferably 2-3 microns.

The release layer can advantageously contain various additives, including slip additives, anti-bloc additives and foaming agents.

A slip additive serves to reduce the coefficient of resistance (friction) of the layered product, as may be desirable according to the ultimate end-use. For example, where the layered product is used as a bandage, it is advantageous that clothing worn over the bandage is able to move freely.

Suitable slip additives are amide-containing such as Conpol ® 20S2 (available from the DuPont Company) and are typically present in the slip layer in an amount ranging from 1 to 10 weight percentage.

Anti-bloc additives facilitate unwinding or unrolling of the layered product (the layered product is typically stored in a rolled or wound state). Suitable anti-bloc additives are silica-containing such as Conpol ® 20B (available from the DuPont Company) and are typically present in the release layer in an amount ranging from 1 to 10 weight percentage.

A foaming agent serves to form voids in the release layer, thereby increasing its permeability to water vapor. Suitable foaming agents are known in the art.

Alternatively, the release layer may be a second porous substrate.

"Tie layer" refers to an optional layer which is situated between the porous substrate and the barrier layer. The tie layer serves to enhance the adherence of the aforementioned barrier layer to the porous substrate for such end-uses where a more durable bond between the barrier layer and the porous substrate is required and/or where the adhesion between the particular materials selected for the barrier layer and the porous substrate is weak. Accordingly, the barrier layer will have a greater tendency to adhere to the tie layer than to a roll of the manufacturing equipment (described hereinafter). Typical tie layers will comprise thermoplastics such as ethylene copolymers and polyurethanes and will be so chosen to be compatible with the chosen substrate and barrier layers. Such tie layers will preferably have a melt temperature ranging from 170-270 °C, a melt index ranging from 3-30 g/10 min. at 190 °C and 2.16 kg and elongation at break of at least 100%

Preferred materials for the tie layer are EEA, EBA, EMA, EVA and include Bynel ® (a coextrudable adhesive available from the DuPont Company). These materials demonstrate a tenacity to the materials making up the porous substrate and the barrier layer, yet do not adhere to metals, of which the rolls of the manufacturing equipment are normally constructed.

The thickness of the tie layer will be selected according to the types of substrate and barrier layer, and will typically range from 1-5 microns in thickness, preferably from 2-3 microns.

The tie layer can optionally contain a foaming agent for the aforementioned purpose of forming voids to enhance water vapor permeability.

"Rolls" refer to the "chill" roll and "nip" roll found in certain types of extrusion coating apparatus. The chill roll serves to cool the extruded or coextruded layers applied to the porous substrate, and the nip roll serves to, together with the chill roll, apply pressure to the coated porous substrate to thereby enhance the adhesion of the coatings to the substrate and to reduce the thickness of the coatings.

The rolls are, accordingly, so arranged to be oppositely opposed to one another, and are positioned with respect to the coated porous substrate such that at the time the coated porous substrate passes through the rolls, the barrier layer is not fully cured. It is for this reason that the coextruded layers can be made thinner and can bond better to the porous substrate, but it is also for this reason that, in the absence of a release layer, the barrier layer would have a tendency to adhere to the roll directly opposing it.

The nip roll may optionally have an irregular surface, e.g. it may be provided with a pattern of alternating protruding regions and recessed regions. The protruding regions of the nip roll cause corresponding regions of the barrier layer (or optional tie layer) to adhere to the porous substrate, whereas other regions corresponding to the recessed regions of the nip roll do not adhere to the porous substrate. An advantage of providing localized regions of adherence and non-adherence between the barrier layer (or optional tie layer) and the porous substrate is that the layered product according to the invention is more flexible than if there were adherence across the entire surface of the barrier layer (or optional tie layer). Flexibility of the layered product can be particularly important for certain end uses, e.g. for protective clothing, food packaging, etc.

The particular pattern of alternating protruding regions and recessed regions provided to the nip roll is a matter of choice, depending upon the particular materials used for the porous substrate, barrier layer and optional tie layer, the end use, etc. Suitable protruding regions on the nip roll may have, by way of example, circular, oval, rectangular or triangular cross-section.

Likewise, the extent to which the surface of the nip roll is covered with protruding regions can vary depending upon the factors previously mentioned. Typically, however, 10-50% of the surface of the nip roll will be comprised of protruding regions.

"Adhesive layer" refers to an adhesive that is optionally applied to the substrate and serves to adhere the layered product of this invention to a desired object. For example, where the layered product is used as a bandage, the adhesive layer will enable the bandage to adhere to skin.

Suitable adhesives are known in the art and are typically synthetic polymers. Where the layered product is adapted for use as a bandage, the adhesive will preferably be hypo-allergenic.

In embodiments where the layered product of this invention includes the aforementioned adhesive layer, the adhesive layer will normally be covered by a protector prior to use. The protector will comprise any material known to those skilled in the art, typically being a polyvinyl chloride or siliconized paper or other siliconized polymers such as high or low density polyethylene.

### Description of the Preferred Embodiments

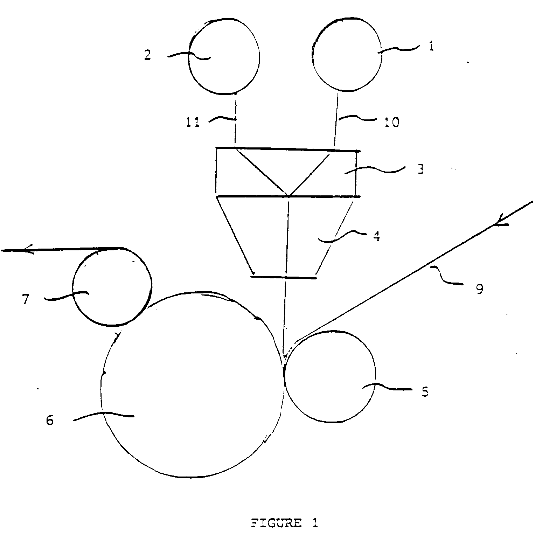

A process according to the invention can be carried out using apparatus shown in Figures 1, 2 and 4 wherein the numbers indicated therein have the following meaning:
1 and 2 are extruders; 3 and 3' are feed blocs; 4 is a flat die; 5 is a nip-roll; 6 is a chill-roll; and 7 is a stripper-roll. Each of these components and their individual operation are known in the art.

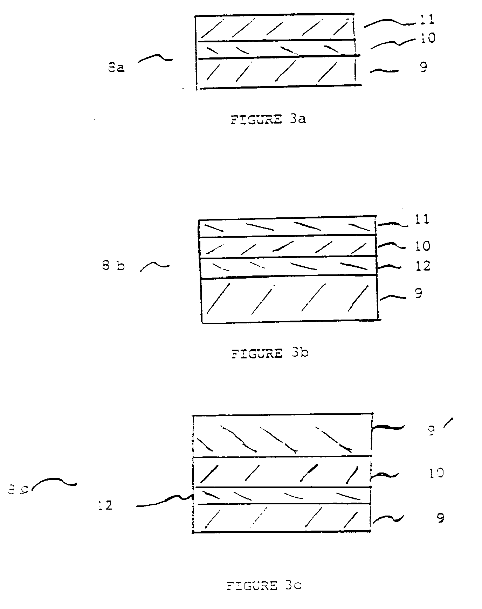

The process according to the invention is essentially a coextrusion coating of a barrier layer, a release layer and optionally a tie layer onto a porous substrate. Layered products made according to the process of the invention are represented in Figures 3a, 3b and 3c as 8a, 8b, and 8c wherein 9 and 9' are porous substrates and may be of the same or different material. 10 is a barrier layer, 11 is a release layer and 12 is a tie layer.

With reference to Figure 1, a porous substrate is fed from an unwinder (not shown) to nip-roll 5 whereupon co-extruded barrier layer 10 and release layer 11 are applied.

The co-extruded barrier layer and release layer are formed as melts in extruders 1 and 2, respectively. Such extruders are maintained at temperatures above the melting points of the release and barrier layer materials, the melts thereby formed being pumped through feed-bloc 3 and merged together upstream of die 4 wherefrom the coextrusion emerges and is drawn down to and coated onto the porous substrate.

The coated substrate is passed between nip-roll 5 and chill-roll 6 whereby the coextruded melts bond to the substrate and solidify. The thereby-formed layered product is subsequently removed from chill-roll 6 using a stripper-roll 7 where it is fed to a rewinder (not shown).

Operating parameters such as temperatures, pressures and feed speeds depend upon the particular materials used and can be easily determined by one skilled in the art.

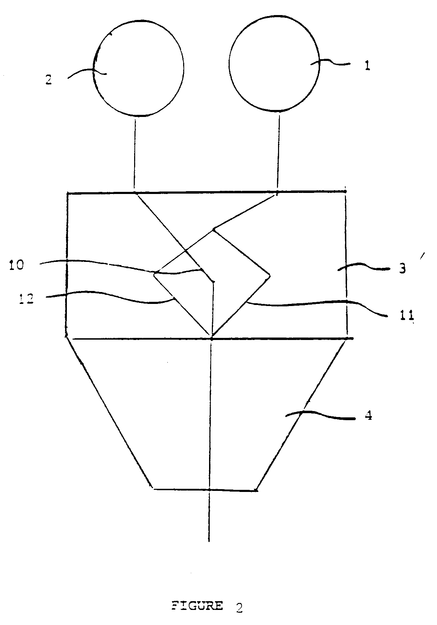

The configuration indicated in Figure 2 can be used for making the layered product 8b of Figure 3b, i.e. a layered product in which three layers (tie layer 12, barrier layer 10, release layer 11) are coextruded and coated onto a porous substrate. As is evident in this embodiment, the release layer and the tie layer comprise the same material whereby their melt is separated into two streams, which form release layer 11 and tie layer 12 which "sandwich" barrier layer 10. The configuration of Figure 2 can, accordingly, replace the configuration of extruders, feed bloc and die shown in Figure 1 to enable production of the layered product of Figure 3b.

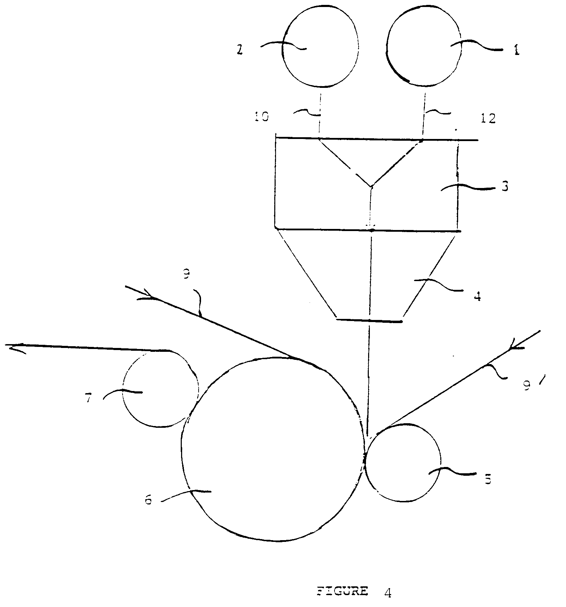

An apparatus configuration as shown in Figure 4 can be used where it is desired to make a layered product such as 8c of Figure 3c. In this embodiment barrier layer 10 is "sandwiched" between tie layer 12 and a release layer (second porous substrate 9').

The operation of the apparatus of Figure 4 is similar to the operation of the embodiments previously described. As indicated in Figure 4, a coextrusion coating comprising tie layer 12 and a barrier layer 10 is coextrusion coated onto a first porous substrate 9 and a second porous substrate 9' is applied to the barrier layer, thereby yielding a layered product having the structure of 8c in Figure 3c.

Further variations and embodiments, such as sequential application of the tie, barrier and release layers to the porous substrate, or introducing a second tie layer between the barrier layer and the second porous substrate, are readily apparent to the skilled artisan are intended within the scope of the process of this application.

### Example 1 (barrier layer/release layer co-extrusion coating)

For forming the barrier layer, Hytrel® G-3548 is first dried, and thereafter a melt is formed in 3.5 inch (8.9 cm) extruder 1 indicated in Figure 1, such extruder being held at a graduated temperature rising from 130 °C at its feed zone to 240 °C at its metering zone.

For forming the release layer, a melt of 99% by weight of Elvax ® 3175 (an EVA available from the DuPont Company) and 1% by weight of Conpol ® 4R is formed in 2.5 inch (6.4 cm) extruder 2, such extruder being held at a graduated temperature rising from 170 °C at its feed zone to 220 °C at its metering zone.

The two melts are pumped through feed bloc 3 and merged upstream of flat die 4, having a width of 800 mm, a gap of 0.7 mm and held at 235 °C.

The two melts are drawn down as co-extruded layers and coated onto a non-woven substrate of PET having a weight of 30 g/m², such substrate being fed onto nip roll 5 at 100 m/min line speed. The resulting layered product has a barrier layer thickness of 16 microns and a release layer thickness of 4 microns. The product is subsequently pressed between nip roll 5 and chill roll 6 at a force of 1500 kg over the substrate width of 550 mm. Chill roll is maintained at 12 °C to cool down the product and is sprayed with water to help prevent sticking of the product. Stripper roll 7 separates the product from chill roll 6, the product being subsequently conveyed to a winder.

### Example 2 (three-layer co-extrusion coating)

For forming both the tie layer and the release layer, a mixture is formed of 96% by weight of Elvax ® 3175, 3% of Elvax ® 96 19-1 (a slip and antibloc additive) and 1% Conpol ® 4R. A melt of this mixture is formed in extruder 1 which is held at a graduated temperature rising from 170 °C to 220 °C (feed zone to metering zone).

The melt is fed to a feed bloc such as feed block 3' indicated in Figure 2 where the melt is split into two streams which will subsequently form the tie layer and the release layer, respectively.

For forming the barrier layer, Hytrel® HTR-8206 is first dried and thereafter a melt is formed in a 3.5 inch (8.9 cm) extruder 2 held at a graduated temperature increasing from 130 °C to 240 °C (feed zone to metering zone).

The barrier layer melt is fed between the two previously described melt streams such that a three layer co-extrusion comprising 1) a 2-micron thick release layer, 2) a 16-micron thick barrier layer and 3) a 2-micron thick tie layer are drawn down and coated onto a polypropylene non-woven having a weight of 30 g/m² and fed at a line speed of 100 m/minute. The product is pressed between a nip roll and chill roll 6 at a pressure of 1500 kg over the substrate width of 550 mm and is cooled by the chill roll 6 which is maintained at 12 °C. The product is separated from the chill roll 6 using stripper roll 7 and is conveyed to the winder.

### Example 3 (two-layer co-extrusion coating, second porous substrate)

For forming a tie layer, a melt of Elvax ® 3175 is formed in extruder 1 of Figure 4 and is held at a graduated temperature rising from 170 °C to 220 °C (feed zone to metering zone).

For forming the barrier layer, Hytrel ® 8206 is first dried and thereafter a melt is formed in a 3.5 inch (8.9 cm) extruder 2 held at a graduated temperature increasing from 130 °C to 240 °C (feed zone to metering zone).

The two melts are fed through feed bloc 3 such that a two layer co-extrusion comprising 1) a 2-micron thick tie layer and 2) a 16-micron thick barrier layer are drawn down and coated onto a polypropylene non-woven having a weight of 100 g/m² and fed at a line speed of 100 m/minute. A PET non-woven is applied to the barrier layer. The resulting sandwich product is pressed between a nip roll and chill roll 6 at a pressure of 1500 kg over the substrate width of 550 mm and is cooled by the chill roll 6 which is maintained at 12 °C. The product is separated from the chill roll 6 using stripper roll 7 and is conveyed to the winder.

## Claims

1. A layered product comprising a porous substrate, a barrier layer and a release layer so situated such that the barrier layer is between the porous substrate and the release layer.

2. A layered product according to claim 1 wherein the porous substrate comprises a paper, a woven or non-woven fabric or a porous or perforated film.

3. A layered product according to claim 1 or claim 2 wherein the barrier layer comprises a thermoplastic selected from copolyether amides, copolyether esters and polyurethanes.

4. A layered product according to claim 3 wherein the barrier layer comprises a bicomponent film of a thermoplastic resin selected from copolyether amides, copolyether esters and polyurethanes and a hydrophobic layer situated between the thermoplastic resin and the porous substrate, the bicomponent film thereby permitting differential transfer of moisture vapor and preventing build up of moisture.

5. A layered product according to any one of claims 1 to 4 wherein the release layer comprises an ethylene copolymer, a low molecular weight wax or a second porous substrate.

6. A layered product according to claim 5 wherein the release layer further comprises an anti-bloc additive, a release additive, a slip additive or a foaming agent.

7. A layered product according to any one of claims 1 to 6 wherein regions of the barrier layer adhere to porous substrate and other regions of the barrier layer do not adhere to the porous substrate.

8. A layered product according to any one of claims 1 to 7 further comprising a tie layer situated between the barrier layer and the porous substrate.

9. A layered product according to claim 8 wherein regions of the tie layer adhere to porous substrate and other regions of the tie layer do not adhere to the porous substrate.

10. A layered product according to claims 8 or 9 wherein the tie layer comprises an ethylene copolymer or a polyurethane.

11. A process for making a layered product comprising coextrusion coating onto a porous substrate a barrier layer and a release layer so situated such that the barrier layer is between the release layer and the porous substrate.

12. A process according to claim 11 wherein the porous substrate comprises a paper, a woven or non-woven fabric or a porous or perforated film, the barrier layer comprises a thermoplastic resin selected from the group consisting of copolyether amides, copolyether esters and polyurethanes and the release layer comprises an ethylene copolymer, a low molecular weight wax or a second porous substrate.

13. A process according to claim 11 or 12 further comprising coextrusion coating a tie layer situated between the porous substrate and the barrier layer.
